# EUROPÄISCHE PATENTANMELDUNG

(11) **EP 4 445 706 A1**
(43) Veröffentlichungstag der Anmeldung: **16.10.2024**
(21) Anmeldenummer: 24157357.5
(22) Anmeldetag: 13.02.2024
(51) Int. Cl.: A01B 59/041, A01B 59/06

(54) **SEITENSTREBE ZUR STABILISIERUNG EINES UNTERLENKERS EINER DREI-PUNKT-ANHÄNGUNG EINES TRAKTORS**

(30) Priorität: 11.04.2023 DE 102023109070
(71) Anmelder: CLAAS Tractor S.A.S., 78141 Vélizy-Villacoublay Cedex (FR)
(72) Erfinder: Chartier, Aurélien, 78440 Issou (FR); Martin, Antoine, 92320 Chatillon (FR); Roger, Fabien, 75019 Paris (FR)
(74) Vertreter: CLAAS Gruppe

(57) **Zusammenfassung**

Die vorliegende Erfindung betrifft eine Seitenstrebe (11) zur Stabilisierung eines Unterlenkers (6) einer Drei-Punkt-Anhängung (4) eines Traktors (2). Die Seitenstrebe (11) umfasst ein erstes Strebenelement (15) und ein zweites Strebenelement (16), wobei das zweite Strebenelement (16) zum Verstellen der Seitenstrebe (11) zwischen einer ersten, kürzeren Länge (L1) und zumindest einer zweiten, längeren Länge (L2) entlang der Längsachse (17) der Seitenstrebe (11) relativ zum ersten Strebenelement (15) linear verschiebbar ist. Die Seitenstrebe (11) ist durch ein Arretierelement (18) gekennzeichnet, das mit dem ersten Strebenelement (15) und dem zweiten Strebenelement (16) zum Verstellen der Seitenstrebe (11) zwischen den Längen (L1, L2) und/oder zum Festlegen der Seitenstrebe (11) in einer der Längen (L1, L2) zusammenwirkt. Das Arretierelement (18) nimmt in der ersten Länge (L1) der Seitenstrebe (11) eine andere Position entlang der Längsachse (17) der Seitenstrebe (11) und/oder eine andere Ausrichtung ein als in der zweiten Länge (L2) der Seitenstrebe (11).

## Beschreibung

Die vorliegende Erfindung betrifft eine Seitenstrebe zur Stabilisierung eines Unterlenkers einer Drei-Punkt-Anhängung eines Traktors gemäß dem Oberbegriff des unabhängigen Patentanspruchs 1, eine Drei-Punkt-Anhängung für einen Traktor mit zumindest einer solchen Seitenstrebe gemäß dem Oberbegriff des unabhängigen Patentanspruchs 13 sowie einen Traktor mit einer solchen Drei-Punkt-Anhängung gemäß dem Oberbegriff des unabhängigen Patentanspruchs 14.

Traktoren sind oftmals mit einer Drei-Punkt-Anhängung ausgestattet, die einer Kopplung von Anbaugeräten, wie beispielsweise einem Pflug, mit dem Traktor dienen. Über die Drei-Punkt-Anhängung ist es möglich die gekoppelten Anbaugeräte in die für die Durchführung einer Arbeitsaufgabe erforderliche Stellung zu verlagern. So ist es beispielsweise erforderlich ein als Bodenbearbeitungsgerät ausgebildetes Anbaugerät, wie den genannten Pflug, im Vorgewende anzuheben, um ein Wendemanöver durchführen zu können, und anschließend wieder abzusenken, um die Bodenbearbeitung fortzusetzen. Zur Stabilisierung der Unterlenker einer Drei-Punkt-Anhängung sind weiterhin Seitenstreben bekannt. Mittels solcher Seitenstreben können seitliche Bewegung des gekoppelten Anbaugeräts zumindest in eine Richtung verhindert oder zumindest begrenzt werden. Einige dieser Seitenstreben sind dabei in ihrer Länge veränderbar, sodass abhängig vom Anbaugerät eine Einstellung von verschiedenen Längenkategorien möglich ist.

Die DE 41 18 683 C1 beschreibt in diesem Zusammenhang beispielsweise eine Seitenstrebe, die an ihren Enden jeweils ein Anschlusselement für die Befestigung an einem Unterlenker bzw. mit dem Traktor umfasst. Zur traktorseitigen Befestigung ist an der Gelenkstelle ein Kugelauge vorgesehen, welches eine begrenzte Schwenkbewegung in allen Richtungen und eine Drehbewegung zulässt. Von dem Kugelauge ausgehend erstreckt sich ein damit fest verbundenes inneres Teleskopglied, auf dem ein äußeres Teleskopglied in Richtung der Längsachse der Seitenstrebe, die als Verschiebeachse fungiert, verstellbar geführt ist. Das äußere Teleskopglied umfasst eine Bohrung, in die ein Schiebezapfen hineinragt. Der Schiebezapfen und das äußere Strebenelement sind jeweils mit Absteckbohrungen versehen, in die ein Steckbolzen hindurchführbar ist, um das äußere Teleskopglied zum Schiebezapfen festzulegen und somit eine Grundlänge der Seitenstrebe für einen jeweiligen Anwendungsfall einzustellen.

Seitenstreben für eine Drei-Punkt-Anhängung, deren Grundlänge über einen Steckbolzen und Absteckbohrungen einstellbar ist, sind demnach aus dem Stand der Technik bekannt. Die Einstellung der Grundlänge derartiger Seitenstreben ist allerdings oftmals zeitaufwendig und unter Umständen nicht hinreichend präzise, da es keine eindeutige Position und/oder Ausrichtung des Steckbolzens für die Festlegung der Seitenstrebe in einer der einstellbaren Grundlängen gibt. Vielmehr müssen für die Festlegung der Seitenstrebe in einer Grundlänge die Elemente, beispielsweise äußeres Teleskopglied und Schiebezapfen, der Seitenstrebe stets exakt zueinander ausgerichtet sein, sodass die Absteckbohrungen beider Elemente miteinander fluchten und der Steckbolzen eingebracht werden kann.

Der Bediener hat weiterhin durch die Vielzahl an Absteckbohrungen im äußeren Teleskopglied und Schiebezapfen die Möglichkeit den Steckbolzen innerhalb verschiedener Absteckbohrungen zu platzieren, wobei nicht zwangsläufig sichergestellt ist, dass jede Absteckbohrung des äußeren Teleskopglieds in jeder Grundläge auch mit einer Absteckbohrung im Schiebezapfen fluchtet. Weiterhin besteht die Möglichkeit, dass der Bediener den Steckbolzen zwar in einer Absteckbohrung des äußeren Teleskopglieds platziert, der Schiebezapfen allerdings soweit verschoben ist, dass dieser von dem Steckbolzen nicht mehr erfasst wird. Der Bediener beginnt den Arbeitsauftrag im Glauben er hätte die entsprechende gewünschte Grundlänge festgelegt, obwohl die Grundlänge überhaupt nicht festgestellt ist. Ein derartiger Zustand birgt erhebliche Sicherheitsrisiken während des Betriebs einer Kombination aus Traktor und Anbaugerät.

Ausgehend hiervon ist es demnach die Aufgabe der vorliegenden Erfindung die beschriebenen Nachteile des Standes der Technik auszuräumen und insbesondere eine Seitenstrebe zur Stabilisierung eines Unterlenkers einer Drei-Punkt-Anhängung anzugeben, deren Grundlänge schnell und mit wenig Aufwand, dabei allerdings präzise, ein- und festgestellt werden kann.

Diese Aufgabe wird erfindungsgemäß durch die Merkmale des unabhängigen Patentanspruchs 1 gelöst, wobei vorteilhafte Weiterbildungen der erfindungsgemäßen Seitenstrebe Gegenstand der entsprechenden abhängigen Patentansprüche 2 bis 12 sind.

Demnach betrifft die vorliegende Erfindung eine Seitenstrebe zur Stabilisierung eines Unterlenkers einer Drei-Punkt-Anhängung eines Traktors. Die Seitenstrebe umfasst ein erstes, schwenkbar an dem Traktor befestigbares Strebenelement und ein zweites, an dem Unterlenker befestigbares Strebenelement, wobei das zweite Strebenelement zum Verstellen der Seitenstrebe zwischen einer ersten, kürzeren Länge und zumindest einer zweiten, längeren Länge entlang der Längsachse der Seitenstrebe relativ zum ersten Strebenelement linear verschiebbar ist. Die Seitenstrebe ist dadurch gekennzeichnet, dass sie ein Arretierelement umfasst, das mit dem ersten Strebenelement und dem zweiten Strebenelement zum Verstellen der Seitenstrebe zwischen den Längen und/oder zum Festlegen der Seitenstrebe in einer der Längen zusammenwirkt. Das Arretierelement nimmt in der ersten Länge der Seitenstrebe eine andere Position entlang der Längsachse der Seitenstrebe und/oder eine andere Ausrichtung ein als in der zweiten Länge der Seitenstrebe.

Dadurch, dass das Arretierelement in der ersten, also der kürzeren Länge der Seitenstrebe eine andere Position entlang der Längsachse der Seitenstrebe und/oder eine andere Ausrichtung einnimmt als in der zweiten, also der längeren Länge der Seitenstrebe ist die Einstellung und Festlegung der Seitenstrebe in einer der Grundlängen eindeutig, dabei gleichzeitig besonders unkompliziert und schnell möglich. Ferner kann eine Fehlpositionierung des Arretierelements ausgeschlossen werden, wodurch Risiken im Betrieb des Traktors erheblich verhindert werden können.

Eine andere Position entlang der Längsachse der Seitenstrebe einnehmen ist dabei so zu verstehen, dass die Position des Arretierelements ausgehend vom Fixpunkt der Anbindung der Seitenstrebe an den Traktor entlang der Längsachse der Seitenstrebe in der ersten, kürzeren Länge der Seitenstrebe eine andere ist als in der zweiten, längeren Länge der Seitenstrebe. Eine andere Ausrichtung des Arretierelements ist dabei so zu verstehen, dass das Arretierelement in der ersten, kürzeren Länge der Seitenstrebe in zumindest eine andere Raumrichtung ausgerichtet ist oder eine andere Drehwinkelstellung einnimmt als in der zweiten, längeren Länge der Seitenstrebe.

Gemäß einer Ausführungsform der Erfindung ist vorgesehen, dass das zweite Strebenelement als Hohlkörperprofil ausgebildet ist und das erste Strebenelement zumindest bereichsweise innerhalb des zweiten Strebenelements aufgenommen ist.

Gemäß einer vorteilhaften Weiterbildung ist vorgesehen, dass das erste Strebenelement zumindest bereichsweise massiv bzw. als Vollkörperprofil ausgebildet ist.

Diese Ausgestaltungen stellen sicher, dass das zweite Strebenelement relativ zum ersten Strebenelement entlang der Längsachse der Seitenstrebe zur Einstellung der Länge linear verschiebbar ist, gleichzeitig eine hinreichende Stabilität bzw. Tragfähigkeit der Seitenstrebe gewährleistet ist.

Gemäß einer vorteilhaften Weiterbildung ist vorgesehen, dass das erste Strebenelement zumindest zwei voneinander entlang der Längsachse der Seitenstrebe beabstandete Ausnehmungen und das zweite Strebenelement zumindest eine Ausnehmung umfassen, wobei die Ausnehmung des zweiten Strebenelements mit jeweils einer Ausnehmung des ersten Strebenelements in einer der Längen der Seitenstrebe fluchtet, wobei das Arretierelement zum Festlegen der Seitenstrebe in einer der Längen in miteinander fluchtenden Ausnehmungen angeordnet ist, wobei das Arretierelement als Splint ausgebildet ist.

Vorzugsweise ist vorgesehen, dass das erste Strebenelement zumindest zwei voneinander entlang der Längsachse der Seitenstrebe beabstandete Paare von Ausnehmungen und das zweite Strebenelement zumindest ein Paar von Ausnehmungen umfassen, wobei das Paar von Ausnehmungen des zweiten Strebenelements mit jeweils einem Paar von Ausnehmungen des ersten Strebenelements in einer der Längen der Seitenstrebe fluchtet, wobei das Arretierelement zum Festlegen der Seitenstrebe in einer der Längen in miteinander fluchtenden Paaren von Ausnehmungen angeordnet ist, wobei das Arretierelement als gabelförmiger Splint ausgebildet ist.

Die beiden Ausnehmungen eines jeden Paares von Ausnehmungen sind dabei quer zur Längsachse der Seitenstrebe voneinander beabstandet ausgebildet.

Die Ausnehmung bzw. Ausnehmungen im zweiten Strebenelement sind dabei schlitzförmig ausgebildet. Die Ausnehmungen im ersten Strebenelement sind hingegen nutförmig ausgebildet.

Dadurch, dass in jeder Länge der Seitenstrebe immer nur eine Ausnehmung bzw. nur ein Paar von Ausnehmungen des ersten Strebenelements mit der einen Ausnehmung bzw. dem einen Paar von Ausnehmungen des zweiten Strebenelements fluchtet wird sichergestellt, dass es immer nur eine eindeutige Lage für das Arretierelement zum Feststellen der Seitenstrebe in einer der Längen gibt. Das Arretierelement nimmt in jeder Längeneinstellung der Seitenstrebe eine andere Position entlang der Längsachse der Seitenstrebe ein. Zeitaufwendige und fehlerbehaftete Vorgänge zum Festlegen der Seitenlänge in einer ihrer einstellbaren Grundlägen sind somit ausgeschlossen, was wiederum den Bedienkomfort und die Betriebssicherheit deutlich erhöht. Die Ausgestaltung des Arretierelements als Splint, vorzugsweise als gabelförmiger Splint, erlaubt ein schnelles Verstellen und Festlegen der Seitenstrebe im Betrieb durch ein simples Einstecken und Entfernen des Arretierelements in die miteinander fluchtenden Ausnehmungen in der ersten und zweiten Strebenelement.

Gemäß einer vorteilhaften Weiterbildung ist vorgesehen, dass das Arretierelement einen Magneten umfasst oder magnetisch ausgebildet ist und kraftschlüssig mit dem ersten Strebenelement und/oder dem zweiten Strebenelement zur Sicherung des Arretierelements gegen ungewolltes Lösen zusammenwirkt.

Im Betrieb eines Traktors, insbesondere dann, wenn ein Anbaugerät über die Drei-Punkt-Anhängung mit dem Traktor gekoppelt ist, kommt es zu Schwingungen und Vibrationen, die auf die verschiedenen Komponenten einwirken und zu Relativbewegungen von Komponenten zueinander führen. Auch die Seitenstrebe der Drei-Punkt-Anhängung ist hiervon betroffen, da sie Teil der Schnittstelle von Traktor und Anbaugerät ist. Um einem schwingungs- bzw. vibrationsbedingten, ungewollten Lösen des Arretierelements entgegenzuwirken bzw. dieses ganz zu unterbinden, wirkt das Arretierelement kraftschlüssig mittels des Magneten oder über die magnetische Ausgestaltung mit der Seitenstrebe zusammen.

Gemäß einer weiteren Ausführungsform der Erfindung ist vorgesehen, dass das zweite Strebenelement als gabelförmiges Profil ausgebildet ist und das erste Strebenelement zumindest bereichsweise zwischen zwei Gabelschenkeln des zweiten Strebenelements angeordnet ist.

Gemäß einer vorteilhaften Weiterbildung ist vorgesehen, dass das erste Strebenelement zumindest bereichsweise massiv bzw. als Vollkörperprofil ausgebildet ist.

Auch diese Ausgestaltungen stellen sicher, dass das zweite Strebenelement relativ zum ersten Strebenelement entlang der Längsachse der Seitenstrebe zur Einstellung der Länge linear verschiebbar ist, gleichzeitig eine hinreichende Stabilität bzw. Tragfähigkeit der Seitenstrebe gewährleistet ist.

Gemäß einer vorteilhaften Weiterbildung ist vorgesehen, dass das erste Strebenelement und das zweite Strebenelement jeweils eine quer zur Längsachse der Seitenstrebe verlaufende Ausnehmung für das Arretierelement umfassen, wobei die Ausnehmung des ersten Strebenelements mit der Ausnehmung des zweiten Strebenelements in der ersten Länge der Seitenstrebe fluchtet, wobei das Arretierelement zum Festlegen der Seitenstrebe in der ersten Länge in den miteinander fluchtenden Ausnehmungen des ersten und zweiten Strebenelements und zum Festlegen der Seitenstrebe in der zweiten Länge zwischen den beiden Gabelschenkeln und in Richtung der Längsachse der Seitenstrebe zwischen dem ersten Strebenelement und dem zweiten Strebenelement angeordnet ist, wobei das Arretierelement als Bolzen ausgebildet ist.

Gemäß einer vorteilhaften Weiterbildung ist vorgesehen, dass das erste Strebenelement zwei weitere quer zur Längsachse der Seitenstrebe verlaufende Ausnehmungen umfasst, die entlang der Längsachse der Seitenstrebe voneinander beabstandet ausgebildet sind, wobei in jeder Ausnehmung des ersten Strebenelements ein Stift angeordnet ist, wobei jeder Stift endseitig zur Führung und Begrenzung der Verschiebebewegung des zweiten Strebenelements relativ zum ersten Strebenelement in einander gegenüberliegend ausgebildete Langlöcher des zweiten Strebenelements eingreift.

Dadurch, dass das Arretierelement zum Festlegen der Seitenstrebe in der ersten Länge in den miteinander fluchtenden Ausnehmungen des ersten und zweiten Strebenelements und zum Festlegen der Seitenstrebe in der zweiten Länge zwischen den beiden Gabelschenkeln und in Richtung der Längsachse der Seitenstrebe zwischen dem ersten Strebenelement und dem zweiten Strebenelement angeordnet ist, wird sichergestellt, dass es auch in dieser Ausführungsform immer nur eine eindeutige Lage für das Arretierelement zum Feststellen der Seitenstrebe in einer der Längen gibt. Das Arretierelement nimmt in jeder Längeneinstellung der Seitenstrebe eine andere Position entlang der Längsachse der Seitenstrebe und gleichzeitig eine andere Ausrichtung in zumindest einer Raumrichtung ein. Zeitaufwendige und fehlerbehaftete Vorgänge zum Festlegen der Seitenlänge in einer ihrer einstellbaren Grundlägen sind somit auch hier ausgeschlossen, wodurch der Bedienkomfort und die Betriebssicherheit deutlich erhöht werden.

Gemäß einer vorteilhaften Weiterbildung ist vorgesehen, dass das Arretierelement eine federbelastete Kugel umfasst, die form- und kraftschlüssig mit dem ersten Strebenelement und/oder dem zweiten Strebenelement zur Sicherung des Arretierelements gegen ungewolltes Lösen zusammenwirkt.

Auch hier gilt, dass es im Betrieb eines Traktors, insbesondere dann, wenn ein Anbaugerät über die Drei-Punkt-Anhängung mit dem Traktor gekoppelt ist, zu Schwingungen und Vibrationen kommen kann, die auf die verschiedenen Komponenten einwirken und zu Relativbewegungen von Komponenten zueinander führen. Auch die Seitenstrebe der Drei-Punkt-Anhängung ist hiervon betroffen, da sie Teil der Schnittstelle von Traktor und Anbaugerät ist. Um einem schwingungs- bzw. vibrationsbedingten, ungewollten Lösen des Arretierelements entgegenzuwirken bzw. dieses ganz zu unterbinden, wirkt das Arretierelement form- und kraftschlüssig über die federbelastete Kugel mit der Seitenstrebe zusammen.

Gemäß einer weiteren Ausführungsform der Erfindung ist vorgesehen, dass das erste Strebenelement zumindest bereichsweise als Hohlkörperprofil ausgebildet ist und das zweite Strebenelement zumindest bereichsweise innerhalb des ersten Strebenelements aufgenommen ist, wobei das erste und das zweite Strebenelement über eine Zugfeder miteinander gekoppelt sind.

Gemäß einer vorteilhaften Weiterbildung ist vorgesehen, dass das zweite Strebenelement zumindest bereichsweise massiv bzw. als Vollkörperprofil ausgebildet ist.

Auch diese Ausgestaltung stellt sicher, dass das zweite Strebenelement relativ zum ersten Strebenelement entlang der Längsachse der Seitenstrebe zur Einstellung der Länge linear verschiebbar ist, gleichzeitig eine hinreichende Stabilität bzw. Tragfähigkeit der Seitenstrebe gewährleistet ist.

Gemäß einer vorteilhaften Weiterbildung ist vorgesehen, dass das Arretierelement als Hülse ausgebildet ist, die sowohl auf dem ersten Strebenelement als auch auf dem zweiten Strebenelement um eine durch die Längsachse der Seitenstrebe definierte Rotationsachse drehbeweglich gelagert ist, wobei das erste Strebenelement außenseitig zumindest einen Vorsprung, vorzugsweise zwei einander umfangsseitig gegenüberliegende Vorsprünge, umfasst, wobei der Vorsprung an einer Stirnfläche der Hülse anliegt, deren Verlauf und Kontur derart ausgestaltet ist, dass mittels einer Drehung der Hülse relativ zum ersten Strebenelement und zum zweiten Strebenelement das Verstellen der Seitenstrebe zwischen den Längen und das Festlegen der Seitenstrebe in einer der Längen erfolgt.

Gemäß einer vorteilhaften Weiterbildung ist vorgesehen, dass das zweite Strebenelement eine Ausnehmung umfasst, in der ein Stift angeordnet ist, wobei der Stift endseitig zur Führung und Begrenzung der Verschiebebewegung des zweiten Strebenelements relativ zum ersten Strebenelement in einander gegenüberliegend ausgebildete Langlöcher des ersten Strebenelements eingreift, wobei, vorzugsweise, ein Ende der Zugfeder mit dem Stift gekoppelt ist.

Die Drehbarkeit des als Hülse ausgestalteten Arretierelements in Kombination mit der Ausgestaltung der Stirnfläche der Hülse und den Vorsprüngen am ersten Strebenelement stellt sicher, dass es auch in dieser Ausführungsform immer nur eine eindeutige Lage für das Arretierelement zum Feststellen der Seitenstrebe in einer der Längen gibt. Das Arretierelement nimmt in jeder Längeneinstellung der Seitenstrebe eine andere Position entlang der Längsachse der Seitenstrebe und gleichzeitig eine andere Drehwinkelstellung ein. Zeitaufwendige und fehlerbehaftete Vorgänge zum Festlegen der Seitenlänge in einer ihrer einstellbaren Grundlägen sind somit auch bei dieser Ausführungsform ausgeschlossen, wodurch der Bedienkomfort und die Betriebssicherheit deutlich erhöht werden.

Die spezielle Ausgestaltung der Stirnfläche der Hülse in Kombination mit dem außenseitig ausgebildeten Vorsprung am ersten Strebenelement und der Kopplung beider Strebenelemente über die Zugfeder erlaubt neben der Längenverstellung und der Feststellung der Seitenstrebe in einer der Längen gleichzeitig auch die Sicherung gegen ungewolltes Lösen, ohne dass ein zusätzliches Element hierfür benötigt wird.

Gemäß einer vorteilhaften Weiterbildung der Erfindung ist vorgesehen, dass das Arretierelement einen Betätigungsabschnitt, vorzugsweise einen Griffring, eine Grifflasche, einen Griffkranz oder dergleichen, umfasst.

Hierdurch lässt sich das Arretierelement vom Bediener für die Betätigung zur Positions- und/oder Lageänderung besonders gut greifen.

Die erfindungsgemäße Aufgabe wird ferner durch eine Drei-Punkt-Anhängung für einen Traktor mit zumindest einer solchen Seitenstrebe zur Stabilisierung eines Unterlenkers der Drei-Punkt-Anhängung gemäß dem unabhängigen Patentanspruch 13 gelöst.

Weiterhin wird die erfindungsgemäße Aufgabe durch einen Traktor mit einer solchen Drei-Punkt-Anhängung gemäß dem unabhängigen Patentanspruch 14 gelöst.

Die vorliegende Erfindung wird nachstehend anhand der in den Figuren abgebildeten Ausführungsformen näher beschrieben.

Es zeigen:
- FIG. 1: eine schematische und exemplarische rückwärtige Ansicht eines erfindungsgemäßen Traktors mit einer erfindungsgemäßen Drei-Punkt-Anhängung;
- FIG. 2: eine schematische und exemplarische Darstellung einer erfindungsgemäßen Seitenstrebe zur Stabilisierung eines Unterlenkers der erfindungsgemäßen Drei-Punkt-Anhängung aus FIG. 1;
- FIG. 3A: eine schematische und exemplarische Darstellung einer ersten Ausführungsform der erfindungsgemäßen Seitenstrebe aus FIG. 2 in einer ersten, kürzeren Länge;
- FIG. 3B: eine schematische und exemplarische Darstellung der ersten Ausführungsform der erfindungsgemäßen Seitenstrebe in einer zweiten, längeren Länge;
- FIG. 3C: eine schematische und exemplarische Darstellung von Komponenten der ersten Ausführungsform der erfindungsgemäßen Seitenstrebe;
- FIG. 4A: eine schematische und exemplarische Darstellung einer zweiten Ausführungsform der erfindungsgemäßen Seitenstrebe aus FIG. 2 in einer ersten, kürzeren Länge;
- FIG. 4B: eine schematische und exemplarische Darstellung der zweiten Ausführungsform der erfindungsgemäßen Seitenstrebe in einer zweiten, längeren Länge;
- FIG. 4C: zwei schematische und exemplarische Schnittdarstellungen der zweiten Ausführungsform der erfindungsgemäßen Seitenstrebe in der ersten, kürzeren Länge und in der zweiten, längeren Länge;
- FIG. 5A: eine schematische und exemplarische Darstellung einer dritten Ausführungsform der erfindungsgemäßen Seitenstrebe aus FIG. 2 in einer ersten, kürzeren Länge;
- FIG. 5B: eine schematische und exemplarische Darstellung der dritten Ausführungsform der erfindungsgemäßen Seitenstrebe in einer zweiten, längeren Länge; und
- FIG. 5C: eine schematische und exemplarische Schnittdarstellung der dritten Ausführungsform der erfindungsgemäßen Seitenstrebe in der ersten, kürzeren Länge.

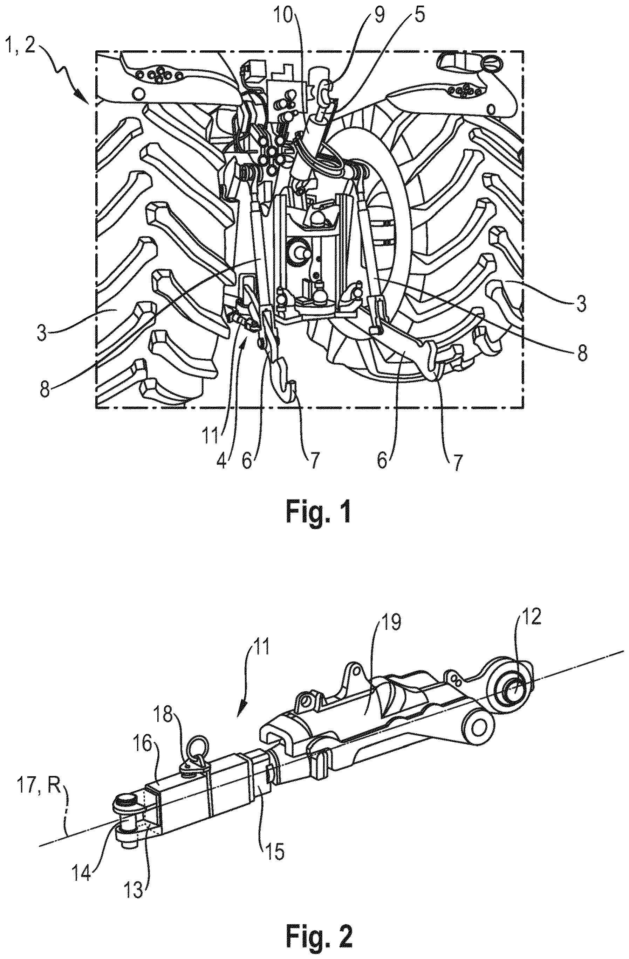

FIG. 1 zeigt eine schematische und exemplarische rückwärtige bzw. heckseitige Ansicht einer landwirtschaftlichen Arbeitsmaschine 1 in Gestalt eines Traktors 2, dessen grundsätzlicher Aufbau bekannt ist. Der Traktor 2 umfasst demnach eine Mehrzahl an - in den FIGs. nicht dargestellten - Arbeitsaggregaten, die dem Antrieb des Traktors 2 über Bodeneingriffsmittel 3 und/oder dem Antrieb eines - in den FIGs. nicht dargestellten - mit dem Traktor 2 gekoppelten bzw. an den Traktor 2 adaptieren Anbaugeräts dienen.

Der Traktor 2 umfasst weiterhin eine sogenannte Drei-Punkt-Anhängung 4, auch als Drei-Punkt-Kraftheber bezeichnet. Eine solche Drei-Punkt-Anhängung 4 ist in der Regel heckseitig und gegebenenfalls auch frontseitig ausgebildet und bildet eine hydraulisch betätigte Vorrichtung am Traktor 2, mittels der ein Anbaugerät mit dem Traktor 2 gekoppelt und lageverändert werden kann. Die Drei-Punkt-Anhängung 4 umfasst einen Oberlenker 5 und zwei Unterlenker 6, welche die Schnittstellen für die Anbindung des Anbaugeräts mit dem Traktor 2 bilden. Die Unterlenker 6 sind einerseits an dem Traktor 2 anlenkbar bzw. angelenkt und andererseits mit einem Fanghaken 7 versehen, um hierüber das Anbaugerät koppeln zu können. Die Unterlenker 6 sind jeweils mit einem Hubzylinder 8, beispielsweise einen Hydraulikzylinder, gekoppelt, mittels dessen Verstellung das angehängte Anbaugerät angehoben oder abgesenkt werden kann. Der Hubzylinder 8 ist hierfür mit einem Ende an dem Traktor 2 und mit dem anderen Ende an dem Unterlenker 6 angelegt. Der Oberlenker 5 ist weiterhin einerseits an dem Traktor 2 anlenkbar bzw. angelenkt und andererseits ebenfalls mit einem Fanghaken 9 versehen, um hierüber das Anbaugerät koppeln zu können. Weiterhin umfasst der Oberlenker 5 ebenfalls einen Hubzylinder 10, beispielsweise einen Hydraulikzylinder, mittels dessen Verstellung das angehängte Anbaugerät geneigt werden kann.

Neben dem Oberlenker 5 und den beiden Unterlenkern 6 umfasst die Drei-Punkt-Anhängung 4 zur Stabilisierung der Unterlenker 6 weiterhin zumindest eine Seitenstrebe 11, vorzugsweise zwei Seitenstreben 11, wobei jeweils eine Seitenstrebe 11 einem jedem Unterlenker 6 zugeordnet ist. Mittels der Seitenstrebe 11 können seitliche Bewegungen des gekoppelten Anbaugeräts zumindest in eine Richtung gänzlich verhindert oder zumindest begrenzt werden.

Eine solche Seitenstrebe 11 ist im Einzelnen in FIG. 2 dargestellt. Die Seitenstrebe 11 umfasst an ihren Enden jeweils ein Anschlusselement 12, 13, von denen ein Anschlusselement 12 der Befestigung der Seitenstrebe 11 am Traktor 2 und das andere Anschlusselement 13 der Befestigung der Seitenstrebe 11 am Unterlenker 6 dient. Das Anschlusselement 12 zur Befestigung der Seitenstrebe 11 am Traktor 2 ist dabei als sogenanntes Kugelauge ausgebildet, welches eine begrenzte Schwenkbewegung der Seitenstrebe 11 relativ zum Traktor 2 in alle Raumrichtungen und eine Drehbewegung zulässt. Das Anschlusselement 13 zur Befestigung der Seitenstrebe 11 am Unterlenker 6 ist hingegen als Gabelkopf ausgestaltet und über einen Anschlusszapfen 14 mit dem Unterlenker 6 koppelbar bzw. gekoppelt.

Die Seitenstrebe 11 umfasst weiterhin ein erstes, schwenkbar an dem Traktor 2 befestigbares bzw. befestigtes Strebenelement 15 und ein zweites, an dem Unterlenker 6 befestigbares bzw. befestigtes Strebenelement 16. Das erste Strebenelement 15 umfasst zur schwenkbaren Anbindung an den Traktor 2 das zuvor genannte Anschlusselement 13, welches als Kugelauge ausgestaltet ist. Das zweite Strebenelement 16 umfasst zur Anbindung an den Unterlenker 6 das zuvor genannte Anschlusselement 13, das als Gabelkopf mit Anschlusszapfen 14 ausgestaltet ist. Die Seitenstrebe 11 ist zwischen verschiedenen Längen, sogenannten Grundlängen, verstellbar. Vorzugsweise sind zwei dieser Längen vorgesehen, nämlich eine erste, kürzere Länge L1 und eine zweite, längere Länge L2. Es ist jedoch auch möglich, dass die Seitenstrebe 11 zwischen mehr als zwei Längen L1, L2 verstellbar ist. Um die Verstellbarkeit der Seitenstrebe 11 zwischen der ersten, kürzeren Länge L1 und der zumindest einen zweiten, längeren Länge L2 zu realisieren, ist das zweite Strebenelement 16 entlang der Längsachse 17 der Seitenstrebe 11 relativ zum ersten Strebenelement 15 linear verschiebbar. Eine solche lineare Verschiebbarkeit des zweiten Strebenelements 16 relativ zum ersten Strebenelement 15 erlaubt es die Seitenstrebe 11 zwischen ihren Längen L1, L2, also den vorgesehenen Grundlängen, zu verstellen.

Die Seitenstrebe 11 umfasst als wesentlichen Bestandteil ein Arretierelement 18, das mit dem ersten Strebenelement 15 und im zweiten Strebenelement 16 zum Verstellen der Seitenstrebe 11 zwischen den Längen L1, L2 und/oder zum Festlegen der Seitenstrebe 11 in einer der Längen L1, L2 zusammenwirkt. Zusammenwirken zum Verstellen der Seitenstrebe 11 zwischen den Längen L1, L2 ist hierbei so zu verstehen, dass eine Betätigung des Arretierelements 18 zu einer Verstellung der Seitenstrebe 11 aus der ersten, kürzeren Länge L1 in die zweite, längere Länge L2 oder aus der zweiten, längeren Länge L2 in die erste, kürzere Länge L1 führt, zumindest jedoch ein Verstellen der Seitenstrebe 11 zwischen den Längen L1, L2 erlaubt. Zusammenwirken zum Festlegen der Seitenstrebe 11 in einer der Längen L1, L2 ist hierbei so zu verstehen, dass mittels des Arretierelements 18 eine Verschiebbarkeit des zweiten Strebenelements 16 relativ zum ersten Strebenelement 15 entlang der Längsachse 17 der Seitenstrebe 11 blockiert bzw. gesperrt wird.

Damit das Verstellen und/oder Festlegen der Seitenstrebe 11 in einer beiden Längen L1, L2 eindeutig, dabei gleichzeitig besonders unkompliziert und schnell möglich wird und es nicht zu einer Fehlpositionierung des Arretierelements 18 kommt, ist es vorgesehen, dass das Arretierelement 18 in der ersten, kürzeren Länge L1 der Seitenstrebe 11 eine andere Position entlang der Längsachse 17 der Seitenstrebe 11 und/oder eine andere Ausrichtung einnimmt als in der zweiten, längeren Länge L2 der Seitenstrebe 11. Eine andere Position entlang der Längsachse 17 der Seitenstrebe 11 ist dabei so zu verstehen, dass die Position des Arretierelements 18 ausgehend vom Fixpunkt der Anbindung der Seitenstrebe 11 an den Traktor 2 entlang der Längsachse 17 der Seitenstrebe in der ersten, kürzeren Länge L1 der Seitenstrebe 11 eine andere ist als in der zweiten, längeren Länge L2 der Seitenstrebe 11. Eine andere Ausrichtung des Arretierelements ist dabei so zu verstehen, dass das Arretierelement 18 in der ersten, kürzeren Länge L1 der Seitenstrebe 11 in zumindest eine andere Raumrichtung ausgerichtet ist oder eine andere Drehwinkelstellung einnimmt als in der zweiten, längeren Länge L2 der Seitenstrebe 11.

Das erste Strebenelement 15 kann weiterhin ein - in den FIGs. nicht dargestelltes - erstes Teleskopglied und zweites Teleskopglied umfassen, wobei das zweite Teleskopglied relativ zum ersten Teleskopglied entlang der Längsachse 17 der Seitenstrebe 11 verschiebbar bzw. teleskopierbar ist. Solche Teleskopeinheiten für Seitenstreben 11 sind grundsätzlich bekannt, wobei die Teleskopfunktion wahlweise hydraulisch oder über eine Feder realisiert sein kann. Zur Unterdrückung einer solchen freien Teleskopierbarkeit des zweiten Teleskopglieds relativ zum ersten Teleskopglied ist eine Verriegelung 19 vorgesehen. Die Verriegelung 19 kann wahlweise derart ausgestaltet sein, dass sie im Verriegelungszustand die Bewegung des zweiten Teleskopglieds linear entlang der Längsachse 17 der Seitenstrebe 11 relativ zum ersten Teleskopglied nur in eine oder aber in beide Richtungen blockiert bzw. sperrt. Derartige Verriegelungen 19 sind ebenfalls grundsätzlich bekannt.

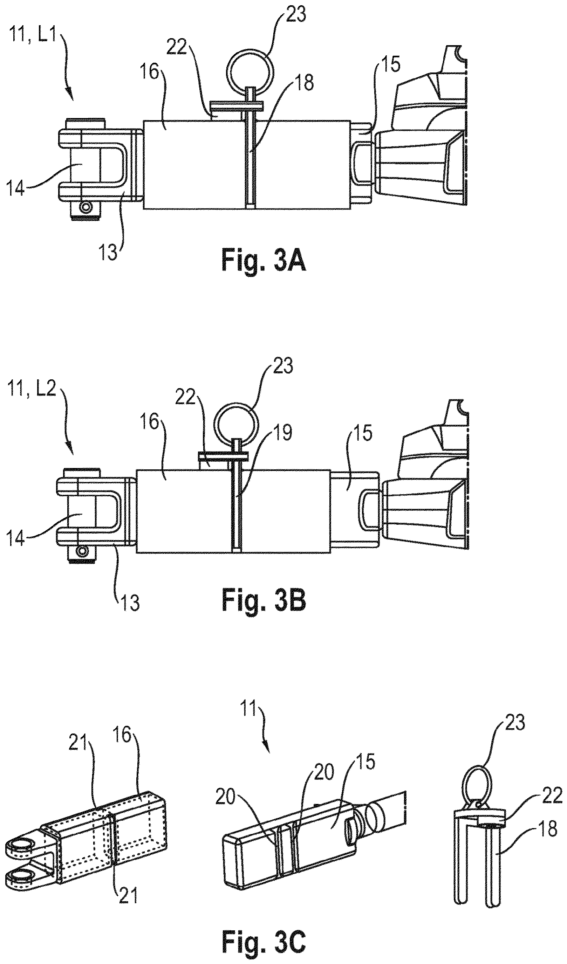

Im Folgenden werden unter Bezugnahme auf die FIGs. 3A bis 5C verschiedene Ausführungsformen der erfindungsgemäßen Seitenstrebe 11 näher beschrieben.

Die FIGs. 3A bis 3C zeigen eine erste Ausführungsform der erfindungsgemäßen Seitenstrebe 11. Hierbei ist vorgesehen, dass das zweite Strebenelement 16 als Hohlkörperprofil ausgebildet ist und das erste Strebenelement 15 zumindest bereichsweise innerhalb des zweiten Strebenelement 16 aufgenommen ist. Das erste Strebenelement 15 ist zumindest bereichsweise massiv bzw. als Vollkörperprofil ausgebildet. Zumindest bereichsweise bedeutet in diesem Zusammenhang, dass das erste Strebenelement 15 zumindest in dem Bereich bzw. Abschnitt massiv bzw. als Vollkörperprofil ausgebildet ist, der mit dem zweiten Strebenelement 16 zum Verstellen der Seitenstrebe 11 zwischen den Längen L1, L2 zusammenwirkt.

Das erste Strebenelement 15 umfasst zumindest zwei voneinander entlang der Längsachse 17 der Seitenstrebe 11 beanstandete Ausnehmungen 20. Vorzugsweise umfasst das erste Strebenelement 15 zumindest zwei voneinander entlang der Längsachse 17 der Seitenstrebe 11 beabstandete Paare von Ausnehmungen 20, wobei die Ausnehmungen 20 eines jeden Paares von Ausnehmungen 20 einander quer zur Längsachse 17 der Seitenstrebe 11 beanstandet, also gegenüberliegend, ausgebildet sind, wie insbesondere in FIG. 3C dargestellt. Das zweite Strebenelement 16 umfasst zumindest eine Ausnehmung 21. Vorzugsweise umfasst das zweite Strebenelement 16 ein Paar von Ausnehmungen 21, wobei die Ausnehmungen 21 des Paares von Ausnehmungen 21 einander quer zur Längsachse 17 der Seitenstrebe 11 beanstandet, also gegenüberliegend, ausgebildet sind. Die Ausnehmung 21 des zweiten Strebenelements 16 ist dabei schlitzförmig ausgebildet. Die Ausnehmungen 20 des ersten Strebenelements 15 sind nutförmig in das erste Strebenelement 15 eingebracht bzw. in dem ersten Strebenelement 15 ausgebildet. Die Ausnehmung 21 bzw. das Paar von Ausnehmungen 21 des zweiten Strebenelements 16 fluchtet in einer der Längen L1, L2 der Seitenstrebe 11 mit jeweils einer Ausnehmung 20 bzw. einem Paar von Ausnehmungen 20 des ersten Strebenelements 15. Zum Festlegen der Seitenstrebe 11 in einer der Längen L1, L2 ist das Arretierelement 18 in den entsprechenden miteinander fluchtenden Ausnehmungen 20, 21 angeordnet. Das Arretierelement 18 ist hierbei als Splint ausgebildet, sodass es in die in einer der Längen L1, L2 miteinander fluchtenden Ausnehmungen 20, 21 gesteckt werden kann. Sofern Paare von Ausnehmungen 20, 21 im ersten Strebenelement 15 und im zweiten Strebenelement 16 ausgebildet sind, ist das Arretierelement 18 als gabelförmiger Splint, wie in den FIGs. 3A bis 3C dargestellt, ausgebildet, sodass das Arretierelement 18 in die in einer der Längen L1, L2 miteinander fluchtende Paare von Ausnehmungen 20, 21 gesteckt werden kann.

Damit sich das Arretierelement 18 im Betrieb des Traktors 2 nicht aufgrund von Schwingungen bzw. Vibrationen ungewollt aus dem Eingriff mit den Strebenelementen 15, 16 lösen kann, ist weiterhin vorgesehen, dass das Arretierelement 18 einen Magneten 22 umfasst, sodass das Arretierelement 18 kraftschlüssig mit dem ersten Strebenelement 15 und/oder dem zweiten Strebenelement 16 zur Sicherung des Arretierelements 18 gegen ungewolltes Lösen zusammenwirkt. Alternativ kann das Arretierelement 18 auch selbst magnetisch ausgebildet sein, um die zuvor erwähnte Sicherung zu gewährleisten.

Das Arretierelement 18 umfasst weiterhin einen Betätigungsabschnitt 23, der im dargestellten Ausführungsbeispiel als Griffring ausgebildet ist. Andere Ausgestaltungen des Betätigungsabschnitts 23, beispielsweise als Griffflasche, Griffkranz oder dergleichen, sind ebenfalls möglich.

Wie insbesondere den FIGs. 3A und 3B zu entnehmen, geht das Verstellen und Festlegen der Seitenstrebe 11 zwischen bzw. in den Längen L1, L2 mit einer Änderung der Position des Arretierelements 18 entlang der Längsachse 17 der Seitenstrebe 11 einher. In jeder der eingestellten Längen L1, L2 der Seitenstrebe 11 gibt es nur eine eindeutige Position des Arretierelements 18, um die Seitenstrebe 11 in der entsprechenden Länge L1, L2 festzulegen. In der ersten, kürzeren Länge L1 der Seitenstrebe 11 (FIG. 3A) befindet sich das Arretierelement 18 ausgehend vom Fixpunkt Traktoranbindung entlang der Längsachse 17 der Seitenstrebe 11 an einer anderen Position als in der zweiten, längeren Länge L2 der Seitenstrebe 11 (FIG. 3B).

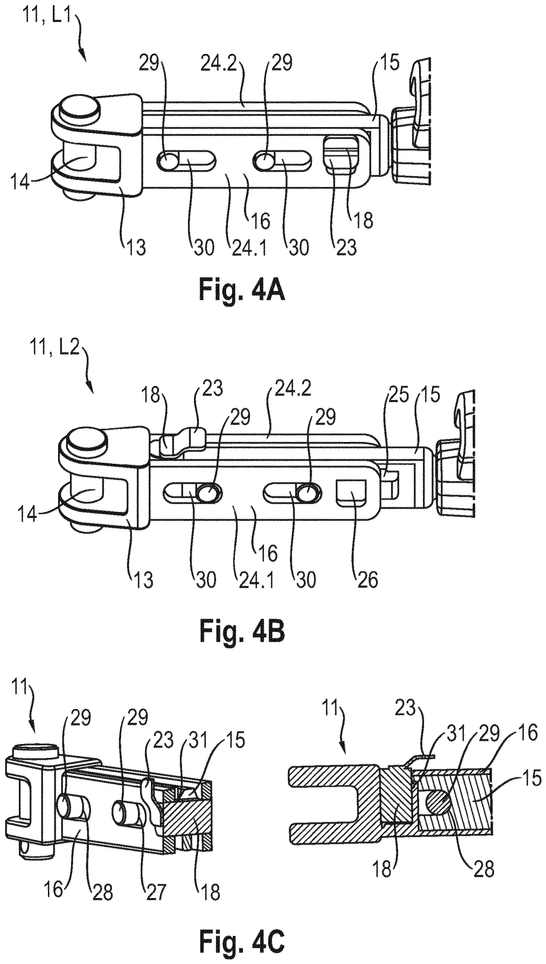

Die FIGs. 4A bis 4C zeigen eine weitere, zweite Ausführungsform der erfindungsgemäßen Seitenstrebe 11. Hierbei ist vorgesehen, dass das zweite Strebenelement 16 gabelförmig bzw. als gabelförmiges Profil ausgebildet ist und das erste Strebenelement 15 zumindest bereichsweise zwischen zwei Gabelschenkeln 24.1, 24.2 des zweiten Strebenelement 16 angeordnet bzw. aufgenommen ist. Auch hier ist es vorgesehen, dass das erste Strebenelement 15 zumindest bereichsweise massiv bzw. als Vollkörperprofil ausgebildet ist. Zumindest bereichsweise bedeutet auch in diesem Zusammenhang, dass das erste Strebenelement 15 zumindest in dem Bereich bzw. Abschnitt massiv bzw. als Vollkörperprofil ausgebildet ist, der mit dem zweiten Strebenelement 16 zum Verstellen der Seitenstrebe 11 zwischen den Längen L1, L2 zusammenwirkt.

Das erste Strebenelement 15 und das zweite Strebenelement 16 umfassen jeweils eine quer zur Längsachse 17 der Seitenstrebe 11 verlaufende bzw. ausgebildete Ausnehmung 25, 26, die der Aufnahme des Arretierelements 18 dienen. Die im ersten Strebenelement 15 ausgebildete Ausnehmung 25 fluchtet mit der im zweiten Strebenelement 16 ausgebildeten Ausnehmung 26 in der ersten, kürzeren Länge L1 der Seitenstrebe 11. Das Arretierelement 18 ist zum Festlegen der Seitenstrebe 11 in dieser ersten, kürzeren Länge L1 in den miteinander fluchtenden Ausnehmungen 25, 26 des ersten Strebenelements 15 und des zweiten Strebenelements 16 angeordnet. Zum Festlegen der Seitenstrebe 11 in der zweiten, längeren Länge L2 ist das Arretierelement 18 hingegen zwischen den beiden Gabelschenkeln 24.1, 24.2 und in Richtung der Längsachse 17 der Seitenstrebe 11 gesehen zwischen dem ersten Strebenelement 15 und dem zweiten Strebenelement 16 angeordnet. Das Arretierelement 18 ist dabei als Bolzen ausgebildet, vorzugsweise als quaderförmiger Bolzen, der in die miteinander fluchtenden Ausnehmungen 25, 26 der beiden Strebenelemente 15, 16, die ebenfalls vorzugsweise quaderförmig ausgebildet sind, bzw. zwischen die Gabelschenkel 24.1, 24.2 und das erste Strebenelement 15 und das zweite Strebenelement 16 in Richtung der Längsachse 17 der Seitenstrebe 11 gesehen gesteckt werden kann.

Das erste Strebenelement 15 umfasst zwei weitere quer zur Längsachse 17 der Seitenstrebe 11 verlaufende bzw. ausgebildete Ausnehmungen 27, 28, die entlang der Längsachse 17 der Seitenstrebe 11 voneinander beanstandet ausgebildet sind und vorzugsweise als Durchgangsbohrungen ausgeführt sind. In jeder Ausnehmung 27, 28 des ersten Strebenelements 15 ist ein, vorzugsweise zylindrisch ausgebildeter, Stift 29 angeordnet, der endseitig zur Führung und Begrenzung der Verschiebebewegung des zweiten Strebenelements 16 relativ zum ersten Strebenelement 15 entlang der Längsachse 17 der Seitenstrebe 11 in einander gegenüberliegend ausgebildete Langlöcher 30 des zweiten Strebenelements 16 eingreift, von denen jeweils nur ein Langloch 30 pro Stift 29 in den FIGs. 4A bis 4C dargestellt ist. Entsprechend den Ausnehmungen 27, 28 des ersten Strebenelement 15 sind auch die Langlöcher 30 verschiedener Stifte 29 entlang der Längsachse 17 der Seitenstrebe 11 voneinander beanstandet ausgebildet. Die Kombination aus in den Ausnehmungen 27, 28 des ersten Strebenelements 15 aufgenommenen Stifte 29 und den Langlöchern 30 im zweiten Strebenelement 16 sorgt dafür, dass sich das zweite Strebenelement 16 lediglich begrenzt entlang der Längsachse 17 der Seitenstrebe 11 relativ zum ersten Strebenelement 15 bewegen kann, eine Bewegung in andere Raumrichtungen oder eine Drehung des zweiten Strebenelement 16 relativ zum ersten Strebenelement 15 allerdings blockiert bzw. gesperrt ist.

Damit sich das Arretierelement 18 im Betrieb des Traktors 2 nicht aufgrund von Schwingungen bzw. Vibrationen ungewollt aus dem Eingriff mit den Strebenelementen 15, 16 lösen kann, ist in dieser Ausführungsform weiterhin vorgesehen, dass das Arretierelement 18 eine federbelastete Kugel 31 umfasst, sodass das Arretierelement 18 kraft- und formschlüssig mit dem ersten Strebenelement 15 und/oder dem zweiten Strebenelement 16 zur Sicherung des Arretierelements 18 gegen ungewolltes Lösen zusammenwirkt. Beim Einstecken des Arretierelements 18 zum Feststellen der Seitenstrebe 11 in einer der Längen L1, L2 wird die Kugel 31 zunächst entgegen der Federkraft in Richtung des Arretierelements 18 bewegt, sodass sich das Arretierelement 18 positionieren lässt. Sobald das Arretierelement eingesteckt ist, wird die Kugel 31 durch die Federkraft zurückbewegt, wodurch die Sicherung realisiert wird. Das erste Strebenelement 15 und das zweite Strebenelement 16 sind dabei derart ausgestaltet, dass die Kugel 31 das erste Strebenelement 15 im Eingriff des Arretierelements hintergreift.

Das Arretierelement 18 umfasst weiterhin auch in dieser Ausführungsform einen Betätigungsabschnitt 23, der im dargestellten Ausführungsbeispiel als Grifflasche ausgebildet ist. Andere Ausgestaltungen des Betätigungsabschnitts 23, beispielsweise als Griffring, Griffkranz oder dergleichen, sind ebenfalls möglich.

Wie insbesondere den FIGs. 4A und 4B zu entnehmen, geht das Verstellen und Festlegen der Seitenstrebe 11 zwischen bzw. in den Längen L1, L2 sowohl mit einer Änderung der Position des Arretierelements 18 entlang der Längsachse 17 der Seitenstrebe 11 als auch mit einer Änderung der Ausrichtung des Arretierelements 18 in zumindest einer der Raumrichtungen einher. In jeder der eingestellten Längen L1, L2 der Seitenstrebe 11 gibt es auch hier nur eine eindeutige Position des Arretierelements 18, um die Seitenstrebe 11 in der entsprechenden Länge L1, L2 festzulegen. In der ersten, kürzeren Länge L1 der Seitenstrebe 11 (FIG. 4A) befindet sich das Arretierelement 18 ausgehend vom Fixpunkt Traktoranbindung entlang der Längsachse 17 der Seitenstrebe 11 an einer anderen Position und nimmt gleichzeitig eine andere Ausrichtung ein als in der zweiten, längeren Länge L2 der Seitenstrebe 11 (FIG. 4B).

In einer - in den FIGs. nicht dargestellten - alternativen Ausgestaltung des in den FIG. 4A bis 4C abgebildeten Ausführungsbeispiels kann das zweite Strebenelement 16 als Hohlkörperprofil ausgebildet und das erste Strebenelement 15 zumindest bereichsweise innerhalb des zweiten Strebenelement 16 aufgenommen sein. Auch hier ist entsprechend vorgesehen, dass das erste Strebenelement 15 zumindest bereichsweise massiv bzw. als Vollkörperprofil ausgebildet ist. Zumindest bereichsweise bedeutet auch in diesem Zusammenhang, dass das erste Strebenelement 15 zumindest in dem Bereich bzw. Abschnitt massiv bzw. als Vollkörperprofil ausgebildet ist, der mit dem zweiten Strebenelement 16 zum Verstellen der Seitenstrebe 11 zwischen den Längen L1, L2 zusammenwirkt.

Das erste Strebenelement 15 und das zweite Strebenelement 16 umfassen auch hier jeweils eine quer zur Längsachse 17 der Seitenstrebe 11 verlaufende bzw. ausgebildete Ausnehmung 25, 26, die der Aufnahme des Arretierelements 18 dienen. Die im ersten Strebenelement 15 ausgebildete Ausnehmung 25 fluchtet mit der im zweiten Strebenelement 16 ausgebildeten Ausnehmung 26 in der ersten, kürzeren Länge L1 der Seitenstrebe 11. Das Arretierelement 18 ist zum Festlegen der Seitenstrebe 11 in dieser ersten, kürzeren Länge L1 in den miteinander fluchtenden Ausnehmungen 25, 26 des ersten Strebenelements 15 und des zweiten Strebenelements 16 angeordnet. Zum Festlegen der Seitenstrebe 11 in der zweiten, längeren Länge L2 umfasst entweder lediglich das zweite Strebenelement 16 eine weitere quer zur Längsachse 17 der Seitenstrebe 11 verlaufende bzw. ausgebildete Ausnehmung 26 oder aber beide Strebenelemente 15, 15 weitere quer zur Längsachse 17 der Seitenstrebe 11 verlaufende bzw. ausgebildete Ausnehmungen 25, 26. Das Arretierelement 18 wird je nach Ausgestaltung in der zweiten, längeren Länge L2 entweder durch die weitere Ausnehmung 26 im zweiten Strebenelement 16 gesteckt, sodass es in Richtung der Längsachse 17 der Seitenstrebe 11 gesehen zwischen dem ersten Strebenelement 15 und dem zweiten Strebenelement 16 angeordnet ist oder aber in die Ausnehmungen 25, 26 in beiden Strebenelementen 25, 26 gesteckt, die dann miteinander fluchten. Das Arretierelement 18 und die Ausnehmungen 25, 26 sind wie auch bei der ersten Ausgestaltung als Bolzen, vorzugsweise als quaderförmiger Bolzen, bzw. quaderförmig ausgebildet.

In dieser alternativen Ausgestaltung umfasst das erste Strebenelement 15 nur eine weitere quer zur Längsachse 17 der Seitenstrebe 11 verlaufende bzw. ausgebildete Ausnehmungen 27, die vorzugsweise als Durchgangsbohrung ausgeführt ist. In dieser Ausnehmung 27 des ersten Strebenelements 15 ist entsprechend zur ersten Ausgestaltung ein, vorzugsweise zylindrisch ausgebildeter, Stift 29 angeordnet, der endseitig zur Führung und Begrenzung der Verschiebebewegung des zweiten Strebenelements 16 relativ zum ersten Strebenelement 15 entlang der Längsachse 17 der Seitenstrebe 11 in einander gegenüberliegend ausgebildete Langlöcher 30 des zweiten Strebenelements 16 eingreift. Auch hier dient die Kombination aus in der Ausnehmung 27 des ersten Strebenelements 15 aufgenommenem Stift 29 und den Langlöchern 30 im zweiten Strebenelement 16 dafür, dass sich das zweite Strebenelement 16 lediglich begrenzt entlang der Längsachse 17 der Seitenstrebe 11 relativ zum ersten Strebenelement 15 bewegen kann.

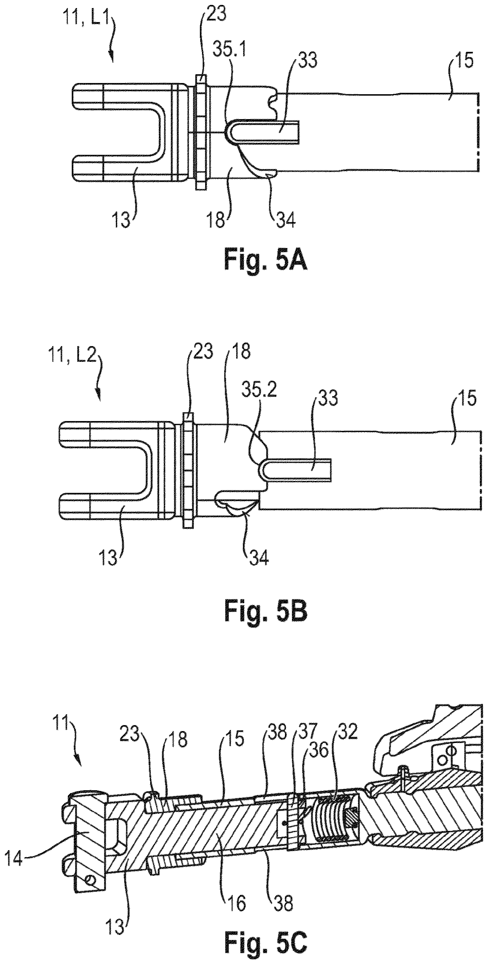

Die FIGs. 5A bis 5C zeigen eine weitere, dritte Ausführungsform der erfindungsgemä-ßen Seitenstrebe 11. Hierbei ist vorgesehen, dass das erste Strebenelement 15 zumindest bereichsweise als Hohlkörperprofil ausgebildet ist und das zweite Strebenelement 16 zumindest bereichsweise innerhalb des ersten Strebenelement 15 aufgenommen ist. Das zweite Strebenelement 16 ist dabei zumindest bereichsweise massiv bzw. als Vollkörperprofil ausgebildet. Zumindest bereichsweise bedeutet in diesem Zusammenhang, dass das erste Strebenelement 15 zumindest in dem Bereich bzw. Abschnitt als Hohlkörperprofil ausgebildet ist, der mit dem zweiten Strebenelement 16 zum Verstellen der Seitenstrebe 11 zwischen den Längen L1, L2 zusammenwirkt. Das zweite Strebenelement 16 ist entsprechend zumindest in dem Bereich bzw. Abschnitt massiv bzw. als Volkskörper Profil ausgebildet, der mit dem ersten Strebenelement 15 zum Verstellen der Seitenstrebe 11 zwischen den Längen L1, L2 zusammenwirkt.

Neben den beiden Strebenelementen 15, 16 umfasst die Seitenstrebe 11 gemäß der dritten Ausführungsform eine Zugfeder 32, welche das erste Strebenelement 15 und das zweite Strebenelement 16 miteinander koppelt. Unter Koppeln ist hierbei ein unmittelbares und/oder mittelbares Koppeln zu verstehen. Die Zugfeder 32 ist dabei derart ausgebildet, dass das zweite Strebenelement 16 zur Verstellung der Seitenstrebe 11 aus der ersten, kürzeren Länge L1 in die zweite, längere Länge L2 entgegen der Federkraft bewegt werden muss.

In dieser Ausführungsform der Seitenstrebe 11 ist das Arretierelement 18 als Hülse ausgebildet, die sowohl auf dem ersten Strebenelement 15 als auch auf dem zweiten Strebenelement 16 drehbeweglich um eine Rotationsachse R, die durch die Längsachse 17 der Seitenstrebe 11 definiert wird, gelagert ist. Das als Hülse ausgebildete Arretierelement 18 liegt dabei abschnittsweise sowohl auf dem Außenumfang des ersten Strebenelements 15 als auch auf dem Außenumfang des zweiten Strebenelements 16 auf. Das erste Strebenelement 15 umfasst außenseitig zumindest einen Vorsprung 33, der an einer Stirnfläche 34 des als Hülse ausgebildeten Arretierelements 18 anliegt. Vorzugsweise umfasst das erste Strebenelement 15 außenseitig zwei Vorsprünge 33, die einander umfangsseitig gegenüberliegend ausgebildet bzw. angeordnet sind. Mit der gegenüberliegenden Stirnseite liegt das als Hülse ausgebildete Arretierelement 18 am Anschlusselement 13 an. Der Verlauf und die Kontur der Stirnfläche 34 des als Hülse ausgebildeten Arretierelements 18 ist derart ausgestaltet, dass mittels einer Drehung des als Hülse ausgebildeten Arretierelements 18 relativ zum ersten Strebenelement 15 und zum zweiten Strebenelement 16 das Verstellen der Seitenstrebe 11 zwischen den Längen L1, L2 und gleichzeitig ein Festlegen der Seitenstrebe 11 in einer der Längen L1, L2 erfolgt. Bei einem Verdrehen des als Hülse ausgebildeten Arretierelements 18 wird der Vorsprung 33 bzw. die Vorsprünge 33 entlang der konturierten Stirnfläche 34 des Arretierelements 18 geführt. Die Bahnkurve, welche die Kontur und den Verlauf der Stirnfläche 34 definiert, verläuft wendelförmig ausgehend von einer ersten nutförmigen Ausnehmung 35.1 hin zu einer zweiten nutförmigen Ausnehmung 35.2, die vorzugsweise um einen Winkel von 90° versetzt ausgebildet sind. Sofern das erste Strebenelement 15 zwei Vorsprünge 33 umfasst, umfasst die Stirnfläche 34 zwei konturierte Abschnitte mit jeweils einer ersten nutförmigen Ausnehmung 35.1 und einer zweiten nutförmigen Ausnehmung 35.2, die über einen wendelförmig verlaufenden Abschnitt miteinander verbunden sind. Das Zusammenwirken von Vorsprung 33 und konturierter Stirnfläche 34 sorgt dabei dafür, dass sich das zweite Strebenelement 16 bei einer Drehung des Arretierelements entweder entgegen der Federkraft der Zugfeder 32 bewegt und eine Verstellung der Seitenstrebe 11 aus der ersten, kürzeren Länge L1 in die zweite, längere Länge L2 erfolgt oder mit der Federkraft der Zugfeder 32 bewegt und eine Verstellung der Seitenstrebe 11 aus der zweiten, längeren Länge L2 in die erste, kürze Länge L1 erfolgt. In den jeweiligen Längen L1, L2 der Seitenstrebe 11 ist der Vorsprung 33 oder sind, je nach Ausgestaltung, die Vorsprünge 33 jeweils in einer der nutförmigen Ausnehmungen 35.1, 35.2 positioniert, wodurch die entsprechende Länge L1, L2 festgelegt wird.

Das zweite Strebenelement 16 umfasst weiterhin, wie insbesondere der Schnittdarstellung in FIG. 5C zu entnehmen, eine Ausnehmung 36, die vorzugsweise als Durchgangsbohrung ausgebildet ist, in der ein, vorzugsweise zylindrisch ausgebildeter, Stift 37 angeordnet ist. Der Stift 37 greift endseitig zur Führung und Begrenzung der Verschiebebewegung des zweiten Strebenelements 16 relativ zum ersten Strebenelement 15 in einander gegenüberliegend ausgebildete Langlöcher 38 des ersten Strebenelements 15 ein. Ein Ende der Zugfeder 32 ist dabei vorzugsweise mit dem Stift 37 gekoppelt, wodurch eine Zugkraft auf das zweite Strebenelement 16 ausgeübt wird.

Das Arretierelement 18 umfasst auch in dieser Ausführungsform einen Betätigungsabschnitt 23, der im dargestellten Ausführungsbeispiel als Griffkranz ausgebildet ist. Andere Ausgestaltungen des Betätigungsabschnitts 23, beispielsweise als Griffring, Grifflasche oder dergleichen, sind ebenfalls möglich.

Wie insbesondere den FIGs. 5A und 5B zu entnehmen, geht das Verstellen und Festlegen der Seitenstrebe 11 zwischen bzw. in den Längen L1, L2 sowohl mit einer Änderung der Position des Arretierelements 18 entlang der Längsachse 17 der Seitenstrebe 11 als auch mit einer Änderung der Ausrichtung des Arretierelements 18 einher. In jeder der eingestellten Längen L1, L2 der Seitenstrebe 11 gibt es auch hier nur eine eindeutige Position des Arretierelements 18, um die Seitenstrebe 11 in der entsprechenden Länge L1, L2 festzulegen. In der ersten, kürzeren Länge L1 der Seitenstrebe 11 (FIG. 5A) befindet sich das Arretierelement 18 ausgehend vom Fixpunkt Traktoranbindung entlang der Längsachse 17 der Seitenstrebe 11 an einer anderen Position und nimmt gleichzeitig eine andere Ausrichtung, hier Drehwinkelstellung um die Rotationsachse R, ein als in der zweiten, längeren Länge L2 der Seitenstrebe 11 (FIG. 5B).

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Arbeitsmaschine | 23 | Betätigungsabschnitt |
| | | 24.1 | Gabelschenkel |
| 2 | Traktor | 24.2 | Gabelschenkel |
| 3 | Bodeneingriffsmittel | 25 | Ausnehmung |
| 4 | Drei-Punkt-Anhängung | 26 | Ausnehmung |
| 5 | Oberlenker | 27 | Ausnehmung |
| 6 | Unterlenker | 28 | Ausnehmung |
| 7 | Fanghaken | 29 | Stift |
| 8 | Hubzylinder | 30 | Langloch |
| 9 | Fanghaken | 31 | federbelastete Kugel |
| 10 | Hubzylinder | 32 | Zugfeder |
| 11 | Seitenstrebe | 33 | Vorsprung |
| 12 | Anschlusselement | 34 | Stirnfläche |
| 13 | Anschlusselement | 35.1 | nutförmige Ausnehmung |
| 14 | Anschlusszapfen | 35.2 | nutförmige Ausnehmung |
| 15 | erstes Strebenelement | 36 | Ausnehmung |
| 16 | zweites Strebenelement | 37 | Stift |
| 17 | Längsachse | 38 | Langloch |
| 18 | Arretierelement | | |
| 19 | Verriegelung | L1 | erste, kürzere Länge |
| 20 | Ausnehmung | L2 | zweite, längere Länge |
| 21 | Ausnehmung | R | Rotationsachse |
| 22 | Magnet | | |

## Patentansprüche

1. Seitenstrebe (11) zur Stabilisierung eines Unterlenkers (6) einer Drei-Punkt-Anhängung (4) eines Traktors (2), wobei die Seitenstrebe (11) ein erstes, schwenkbar an dem Traktor (2) befestigbares Strebenelement (15) und ein zweites, an dem Unterlenker (6) befestigbares Strebenelement (16) umfasst, wobei das zweite Strebenelement (16) zum Verstellen der Seitenstrebe (11) zwischen einer ersten, kürzeren Länge (L1) und zumindest einer zweiten, längeren Länge (L2) entlang der Längsachse (17) der Seitenstrebe (11) relativ zum ersten Strebenelement (15) linear verschiebbar ist, **dadurch gekennzeichnet, dass** die Seitenstrebe (11) ein Arretierelement (18) umfasst, das mit dem ersten Strebenelement (15) und dem zweiten Strebenelement (16) zum Verstellen der Seitenstrebe (11) zwischen den Längen (L1, L2) und/oder zum Festlegen der Seitenstrebe (11) in einer der Längen (L1, L2) zusammenwirkt, wobei das Arretierelement (18) in der ersten Länge (L1) der Seitenstrebe (11) eine andere Position entlang der Längsachse (17) der Seitenstrebe (11) und/oder eine andere Ausrichtung einnimmt als in der zweiten Länge (L2) der Seitenstrebe (11).

2. Seitenstrebe (11) nach Anspruch 1, **dadurch gekennzeichnet, dass** das zweite Strebenelement (16) als Hohlkörperprofil ausgebildet ist und das erste Strebenelement (15) zumindest bereichsweise innerhalb des zweiten Strebenelements (16) aufgenommen ist.

3. Seitenstrebe (11) nach Anspruch 2, **dadurch gekennzeichnet, dass** das erste Strebenelement (15) zumindest zwei voneinander entlang der Längsachse (17) der Seitenstrebe (11) beabstandete Ausnehmungen (20), vorzugsweise Paare von Ausnehmungen (20), und das zweite Strebenelement (16) zumindest eine Ausnehmung (21), vorzugsweise ein Paar von Ausnehmungen (21), umfassen, wobei die Ausnehmung (21), vorzugsweise das Paar von Ausnehmungen (21), des zweiten Strebenelements (16) mit jeweils einer Ausnehmung (20), einem Paar von Ausnehmungen (20), des ersten Strebenelements (15) in einer der Längen (L1, L2) der Seitenstrebe (11) fluchtet, wobei das Arretierelement (18) zum Festlegen der Seitenstrebe (11) in einer der Längen (L1, L2) in miteinander fluchtenden Ausnehmungen (20, 21) angeordnet ist, wobei das Arretierelement (18) als Splint, vorzugsweise als gabelförmiger Splint, ausgebildet ist.

4. Seitenstrebe (11) nach Anspruch 2 oder 3, **dadurch gekennzeichnet, dass** das Arretierelement (18) einen Magneten (22) umfasst oder magnetisch ausgebildet ist und kraftschlüssig mit dem ersten Strebenelement (15) und/oder dem zweiten Strebenelement (16) zur Sicherung des Arretierelements (18) gegen ungewolltes Lösen zusammenwirkt.

5. Seitenstrebe (11) nach Anspruch 1, **dadurch gekennzeichnet, dass** das zweite Strebenelement (16) als gabelförmiges Profil ausgebildet ist und das erste Strebenelement (15) zumindest bereichsweise zwischen zwei Gabelschenkeln (24.1, 24.2) des zweiten Strebenelements (16) angeordnet ist.

6. Seitenstrebe (11) nach 5, **dadurch gekennzeichnet, dass** das erste Strebenelement (15) und das zweite Strebenelement (16) jeweils eine quer zur Längsachse (17) der Seitenstrebe (11) verlaufende Ausnehmung (25, 26) für das Arretierelement (18) umfassen, wobei die Ausnehmung (25) des ersten Strebenelements (15) mit der Ausnehmung (26) des zweiten Strebenelements (16) in der ersten Länge (L1) der Seitenstrebe (11) fluchtet, wobei das Arretierelement (18) zum Festlegen der Seitenstrebe (11) in der ersten Länge (L1) in den miteinander fluchtenden Ausnehmungen (25, 26) des ersten und zweiten Strebenelements (15, 16) und zum Festlegen der Seitenstrebe (11) in der zweiten Länge (L2) zwischen den beiden Gabelschenkeln (24.1, 24.2) und in Richtung der Längsachse (17) der Seitenstrebe (11) zwischen dem ersten Strebenelement (15) und dem zweiten Strebenelement (16) angeordnet ist, wobei das Arretierelement (18) als Bolzen ausgebildet ist.

7. Seitenstrebe (11) nach Anspruch 5 oder 6, **dadurch gekennzeichnet, dass** das erste Strebenelement (15) zwei weitere quer zur Längsachse (17) der Seitenstrebe (11) verlaufende Ausnehmungen (27, 28) umfasst, die entlang der Längsachse (17) der Seitenstrebe (11) voneinander beabstandet ausgebildet sind, wobei in jeder Ausnehmung (27, 28) des ersten Strebenelements (15) ein Stift (29) angeordnet ist, wobei jeder Stift (29) endseitig zur Führung und Begrenzung der Verschiebebewegung des zweiten Strebenelements (16) relativ zum ersten Strebenelement (15) in einander gegenüberliegend ausgebildete Langlöcher (30) des zweiten Strebenelements (16) eingreift.

8. Seitenstrebe (11) nach einem der Ansprüche 5 bis 7, **dadurch gekennzeichnet, dass** das Arretierelement (18) eine federbelastete Kugel (31) umfasst, die form- und kraftschlüssig mit dem ersten Strebenelement (15) und/oder dem zweiten Strebenelement (16) zur Sicherung des Arretierelements (18) gegen ungewolltes Lösen zusammenwirkt.

9. Seitenstrebe (11) nach Anspruch 1, **dadurch gekennzeichnet, dass** das erste Strebenelement (15) zumindest bereichsweise als Hohlkörperprofil ausgebildet ist und das zweite Strebenelement (16) zumindest bereichsweise innerhalb des ersten Strebenelements (15) aufgenommen ist, wobei das erste und das zweite Strebenelement (15, 16) über eine Zugfeder (32) miteinander gekoppelt sind.

10. Seitenstrebe (11) nach Anspruch 9, **dadurch gekennzeichnet, dass** das Arretierelement (18) als Hülse ausgebildet ist, die sowohl auf dem ersten Strebenelement (15) als auch auf dem zweiten Strebenelement (16) um eine durch die Längsachse (17) der Seitenstrebe (11) definierte Rotationsachse (R) drehbeweglich gelagert ist, wobei das erste Strebenelement (15) außenseitig zumindest einen Vorsprung (33), vorzugsweise zwei einander umfangsseitig gegenüberliegende Vorsprünge (33), umfasst, wobei der Vorsprung (33) an einer Stirnfläche (34) der Hülse anliegt, deren Verlauf und Kontur derart ausgestaltet ist, dass mittels einer Drehung der Hülse relativ zum ersten Strebenelement (15) und zum zweiten Strebenelement (16) das Verstellen der Seitenstrebe (11) zwischen den Längen (L1, L2) und das Festlegen der Seitenstrebe (11) in einer der Längen (L1, L2) erfolgt.

11. Seitenstrebe (11) nach Anspruch 9 oder 10, **dadurch gekennzeichnet, dass** das zweite Strebenelement (16) eine Ausnehmung (36) umfasst, in der ein Stift (37) angeordnet ist, wobei der Stift (37) endseitig zur Führung und Begrenzung der Verschiebebewegung des zweiten Strebenelements (16) relativ zum ersten Strebenelement (15) in einander gegenüberliegend ausgebildete Langlöcher (38) des ersten Strebenelements (15) eingreift, wobei, vorzugsweise, ein Ende der Zugfeder (32) mit dem Stift (37) gekoppelt ist.

12. Seitenstrebe (11) nach einem der Ansprüche 1 bis 11, **dadurch gekennzeichnet, dass** das Arretierelement (18) einen Betätigungsabschnitt (23), vorzugsweise einen Griffring, eine Grifflasche, einen Griffkranz oder dergleichen, umfasst.

13. Drei-Punkt-Anhängung (4) für einen Traktor (2) mit zumindest einer Seitenstrebe (11) zur Stabilisierung eines Unterlenkers (6) der Drei-Punkt-Anhängung (4), **dadurch gekennzeichnet, dass** die Seitenstrebe (11) nach einem der Ansprüche 1 bis 12 ausgebildet ist.

14. Traktor (2) mit einer Drei-Punkt-Anhängung (4), **dadurch gekennzeichnet, dass** die Drei-Punkt-Anhängung (4) nach Anspruch 13 ausgebildet ist.
